# EUROPEAN PATENT APPLICATION

(11) **EP 3 171 578 A1**
(43) Date of publication of application: **24.05.2017**
(21) Application number: 15195199.3
(22) Date of filing: 18.11.2015
(51) Int. Cl.: H04M 1/725, G06F 3/01, G06Q 50/00, G08B 1/08, H04M 1/22

(54) **METHOD OF IMPROVED FINDING SOMEONE OR SOMETHING WITHIN A LARGER GROUP OF PEOPLE OR THINGS**

(71) Applicant: Siemens Aktiengesellschaft, 80333 München (DE)
(72) Inventor: Johnson, Rebecca, 81825 München (DE); MacWilliams, Asa, 82256 Fürstenfeldbruck (DE)

(57) **Abstract**

In particular, the gist of the invention is the following:
A method of improved finding someone or something within a larger group of people or things by providing a user with a first smart device and a target to be found with a second smart device, establishing a communication channel between both of them, causing an illumination source of the second smart device to change its intensity via the communication channel, waving first smart device of user with a characteristic rhythm, sensing the waving motion and sending a signal with particular features of the waving motion from the first smart device to the second smart device and controlling the illumination source of the second smart device in a way that it is at least blinking with the sent characteristic waving rhythm. The method is easy to set up, easy to use, robust, provides better targeting and can be used with common hardware. Not even cellular network coverage at the meeting place is required.

## Description

### Technical Field

The present disclosure relates to the field of finding or locating methods and their implementation in connection with smart devices like smart phones etc. and specifically to a method of finding someone or something within a larger group of people or things by using the displays of smart devices, e. g. smart phones, to produce a prearranged optical signal which is common to both partners so that they can mutually indentify each other as partners.

A user is trying to find someone or something within a larger group of people or things: This could for example mean trying to identify your lunch date in a crowd of other people; finding the correct hallway to take when heading to your new hotel room; finding the correct part to pick off a shelf in a logistics or assembly task; finding your reserved seat in a movie theater; or figuring out which package at the post office is for you.

### Background Art

Such a method is at least known from an article of MailOnline, Published 12 February 2015, Sarah Griffiths, "Never lose a friend in the crowd again! App transforms phones into attention grabbing flashing beacons of light", (http://www.dailymail.co.uk/sciencetech/article-2950933/Never-lose-friend-crowd-App-transforms-phones-attention-grabbing-flashing-beacons-light.html)

The article teaches that users must pick the color of the light they want, and then send their missing friend a message, saying 'look for a blue flashing light,' for example. They then simply wave their phone, the screen of which has been turned into a flashing colored light, until they attract a friend's attention.

A problem may be here, e. g. that there may be lots of the same color flashing handsets.

The US Patent Application US 2007 /0069889 A1 provides a simple miniaturized electronic device that enables individuals to find a friend, a mate or someone with a specific interest or skill. In one embodiment, a man or a woman may program a MateFinder™ to help find an ideal match.

Information that describes both the user and the ideal match can be written to the non-volatile memory. The radio automatically and periodically broadcasts a "seeking signal" over a short range. When the seeking signal is received by another MateFinder™, it is analyzed to determine the degree of correlation with the receiver's preferences.

If the degree of correlation exceeds a preset minimum, the sender, the receiver, or both are alerted.

This solution might be more precise; however, it requires special electronic devices and cumbersome typing or programming in order to use this method.

Therefore, there is a need for a method of improved finding someone or something within a larger group of people or things, which is more selective respectively provides a better targeting and which uses common hardware and is easy to operate.

According to the invention this need is settled by a method as it is defined by the features of independent claim 1. Preferred embodiments and an appropriate computer program product are subject of the dependent claims.

### Summary of the invention

In particular, the gist of the invention is the following: A method of improved finding someone or something within a larger group of people or things by providing a user with a first smart device and a target to be found with a second smart device, establishing a communication channel between both of them, causing an illumination source of the second smart device to change its intensity via the communication channel, waving first smart device of user with a characteristic rhythm, sensing the waving motion and sending a signal with particular features of the waving motion from the first smart device to the second smart device and controlling the illumination source of the second smart device in a way that it is at least blinking with the sent characteristic waving rhythm. The method is easy to set up, easy to use, robust, provides better targeting and can be used with common hardware. Not even cellular network coverage at the meeting place is required.

### Brief Description of the Drawings

The method and the computer program according to the invention are described in more detail herein below by way of an exemplary embodiment and with reference to the attached drawings, in which:
- Fig. 1: shows a schematic diagram illustrating a first embodiment of the invention and
- Fig. 2: shows a schematic block diagram illustrating a second embodiment of the invention.

### Detailed description of exemplary embodiments

This invention utilizes a smartwatch, a smartphone or other mobile/wearable device on the arm and some form of controllable illumination to help a user find the person or thing he is looking for.

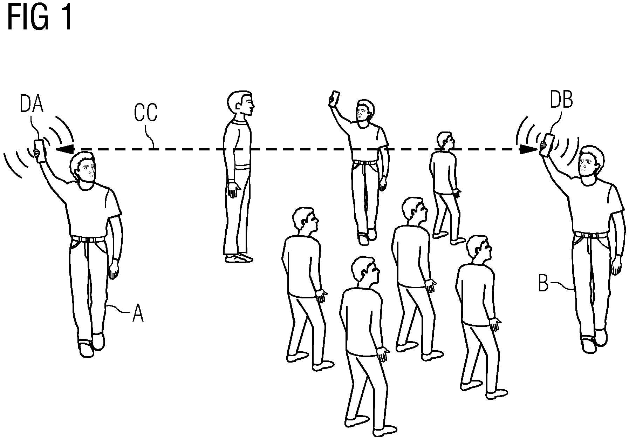

Fig. 1 shows a schematic diagram illustrating a first embodiment of the invention, wherein a user A is waving a first smart device DA and a user B, which is for example the target, is waving with a second smart device DB and wherein there is a communication channel CC established between both devices.

From the user's point of view, it works as follows:
- A user A waves his hand with a smart device, e. g. a cellular phone in it or a smartwatch on his arm.
- The object the user A is looking for lights up or blinks, in the rhythm the user is waving in.
- If several different objects are lit up at the same time perhaps because several others users are also looking for "their" target - the user can move his arms in different rhythms, watching the blinking lights, until he is sure which blinking target device DB is his.
- The user has found his target B.

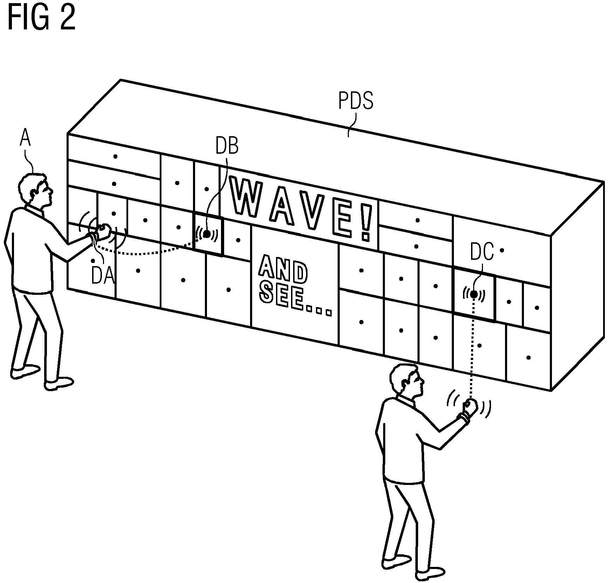

As a first use case, shown in Fig. 2, consider several users, e.g. A, who are due to receive packages from an automatic package dispensing system (Paketbox) PB. Each user simply waves, e. g. with his smart device DA, at the entire container as he approaches. The LEDs of a target smart device, e.g. DB, on the individual package compartments blink in sync with waving of the users that they are for - other devices, like a shown further smart device DC, do not blink in sync with waving of this user. Each user can then directly walk up to his/her own box. Aside from the LED of each compartment the several smart devices DB and DC of the package dispensing system can share common parts und can be for example implemented in one central unit.

As a second use case, consider the user with a smartwatch. He is trying to identify one of several other people, one of whom he has a lunch date with but has never met before. One other user has a necklace with an LED in it which can blink; another has a hat with LEDs on the edge. Since the person with the necklace is the one he is trying to find, only her necklace will blink in sync with the searching user's hand motion.

From a technical point of view, the invention works in general as follows:
- The user A is wearing a smartwatch or another wearable computing device on the arm. Alternatively, the user is holding a smartphone in his hand.
- The smartwatch contains inertial sensors resp. linear accelerometers or gyroscopes.
- The target B, that is other person or object to be found, has a light source attached to it or pointing at it, such as an LED, a smartphone display, a projector, or a ceiling light. This illumination source is controlled by an embedded controller.
- The smartwatch analyzes the user's arm motions to detect particular features of the waving motion, e.g. the points at which the hand reverses direction, e.g. by detecting when the accelerometer value along a certain axis surpasses a certain threshold.
- The smartwatch sends a signal over a wireless network. The signal identifies either the user, the target to be found, or a common numeric identifier known to both the smartwatch and the embedded controller. Optionally the signal also indicates the direction, e. g. left or right, of the arm motion and its intensity.
- The embedded controller receives the signal from the smartwatch, either directly via wireless communication, or via an intermediate network, best with a low latency.
- The embedded controller causes the illumination source to change intensity when it receives the signal.
- Optionally it can use two different colors for a "left" and "right" arm motion, and adjust the intensity to the intensity of the motion.

In a last use case, two users, A and B, are both using the invention simultaneously - A to find B, and B to find A. As A waves his phone, B's phone changes illumination intensity, and vice versa.

This invention utilizes smartphones and/or wearable computing devices to help the partners find each other. From the user's point of view, it works as described in the following example, with two users, each with a smartphone or wearable computing device running a special app.

First, assume that the partners have exchanged an electronic calendar invitation with a unique ID or hash value, so that their date is in the electronic calendars of their smartphones.

User A and User B proceed to the meeting place at the agreed upon time. Assume A arrives first.
(1) User A arrives at the meeting place, and opens the App on his smartphone. Phone A shows "Waiting for your lunch date..." in blue writing in a yellow background.
(2) User B arrives at the meeting place, opens the App. Phone B shows "Your lunch date us nearby. Wave the phone in the air." in yellow writing on a blue background. Phone A vibrates and shows "Your lunch date us nearby. Wave the phone in the air." in blue writing on a yellow background.
(3) Users A and B start waving their phones in the air.

With each wave of phone A, phone B vibrates and switches between an all blue screen and an all yellow screen. With each wave of phone B, phone A vibrates and switches between an all blue screen and an all yellow screen. Users A and B can feel each other waving even if they can't see each other yet. User A can recognize that B is B since phone B is reacting to A's movements and is showing matching colors.

In contrast, if another user in the crowd is also waving, his phone will not be in sync with User A's or User B's movements, and the colors blue/yellow will also not match.
(4) User A sees user B and approaches. User B sees User A. Both stop waving.

From a technical point of view, this last use case of the invention works as follows:
- When User A starts the App, Phone A performs a local wireless network broadcast, with the ID of the meeting from the users' calendars, to check if Phone B is in the vicinity with the App running. Phone B is not. Thus, the App on Phone A tells the user to wait, and continues wireless broadcasting and listening.
- When User B arrives and starts the App, Phone B performs a local wireless network broadcast, with the ID of the meeting from the users' calendars, to check if Phone A is in the vicinity. Phone A receives the message and responds or Phone B receives a message from Phone A and responds. Since Phone A and Phone B are broadcasting the same meeting ID, the Apps establish a communication channel.

- Both Apps now cause their phones to vibrate and alert the user to start waving. The colors, e. g. blue and yellow, are chosen randomly by the apps, or come from the users' preferences.
- The Apps use inertial sensors on the phones to detect the handwaving movement. Upon each wave, the corresponding phone sends a message over the wireless network to the other phone, which then vibrates and changes its display color.
- When the users approach each other and perform a handshake gesture with their phones, the inertial sensors detect this and display the final animation.

### Addtions / Extensions:

Rather than, or in addition to, using a smartphone, this invention would also work with various wearable computing devices such as smartwatches, smart jewelry etc.

The local wireless network could be an ad hoc WiFi network, a Bluetooth network, or an infrastructure WiFi network.

Instead of a local wireless network, the phones could detect proximity using GPS or some other location technology, and communicate using the cellular mobile network.

The App could include other features such as calling the partner on the phone, displaying navigational information to the meeting place, performing WiFi-based positioning, selecting a lunch menu, checking the partner's social network profile, etc.

An infrastructure-based local wireless network can also be used for WiFi-based positioning - for example, a restaurant could offer WiFi access points in different restaurant zones, and the App could additionally help the partners figure out which zone of the restaurant the other is in.

The App could be free, as it can work basically without any infrastructure; or it could be supported by sponsors such as the restaurant where the partners are meeting and thus coupled with additional functionality specific to the restaurant.

The invention also provides a computer program or a computer program product for carrying out any of the methods described herein. A computer program embodying the invention may be stored on a computer-readable medium, or it could, for example, be in the form of a signal such as a downloadable data signal provided from an Internet website, or it could be in any other form.

### Further Advantages:

The system works with no local infrastructure aside from the e-mail/calendar servers etc. needed to set up the meeting in the first place. Not even cellular network coverage at the meeting place is required.

An ad hoc local WiFi network is easy to set up based on a common ID, e.g. just create a WiFi network with the SSID WaveAndMeet-1234 for meeting number 1234.

If two smartphones can detect each other on the same ad hoc WiFi network, the two users are probably close enough to be within sight of one another if they start waving.

In contrast to a cellular network, a local wireless network is fast enough resp. has low enough latency to allow Phone B to actually vibrate and blink "in sync" with Phone A's movements.

## Claims

1. Method of improved finding someone or something within a larger group of people or things comprising
- providing a user (A) with a first smart device (DA) and a target (B) to be found with a second smart device (DB) ;
- establishing a communication channel (CC) between the user and the target via a wireless connection;
- causing an illumination source of the second smart device to change its intensity via the communication channel;
- waving first smart device of the user with characteristic rhythm;
- sensing the waving motion of the first smart device;
- detecting particular features of the waving motion with the first smart device;
- sending a signal with the particular features of the waving motion from the first smart device to the second smart device;
- receiving the signal with the second smart device and
- controlling the illumination source of the second smart device in a way that it is at least blinking with the sent characteristic rhythm.

2. Method according to claim 1,
- wherein the signal with the particular features is additionally indicating at least two different directions of a users waving arm motion and
- wherein the illumination source of the second smart device is controlled in a way that it is blinking with at least two different colors accordingly.

3. Method according to claim 1 or 2,
- wherein the signal with the particular features is additionally indicating a strength of a users waving arm motion and
- wherein the illumination source of the second smart device is controlled in a way that it is blinking with different intensity accordingly.

4. Method according to any one of the preceding claims,
- wherein the communication channel between the user and the target is established based on a time of a pre-agreed common date being available to the first smart device and to the second smart device.

5. Method according to claim 4,
- wherein the communication channel between the user and the target is established additionally based on a location of the pre-agreed common date being available to the first smart device and to the second smart device and their sufficient proximity for visual contact.

6. Method according to claim 5,
- wherein a sufficient proximity for visual contact between the first and second smart device is detected using GPS.

7. Method according to any one of the preceding claims, further comprising
- answering after receiving the signal from the first smart device by waving the second smart device of target;
- sensing the waving motion of the second smart device;
- detecting particular features of the waving motion with the second smart device;
- sending a signal with the particular features of the waving motion from the second smart device to the first smart device;
- receiving the signal with the first smart device and
- controlling a vibration source of the first smart device in a way that it is vibrating accordingly to the waiving of the second smart device.

8. Computer program product comprising computer executable instructions, which when loaded on the first and second smart device, provides the first and second smart device with the functionality of the method according to any one of the preceding claims.
